# EUROPÄISCHE PATENTANMELDUNG

(11) **EP 2 315 066 A1**
(43) Veröffentlichungstag der Anmeldung: **27.04.2011**
(21) Anmeldenummer: 10012427.0
(22) Anmeldetag: 30.11.2004
(51) Int. Cl.: G02B 23/12, G02B 27/01, G02B 23/18

(54) **Elektronische Brille, insbesondere Nachtsichtbrille**

(30) Priorität: 01.12.2003 DE 10356024
(62) Teilanmeldung aus: 04803364.1
(71) Anmelder: Durner, Andreas, 86609 Donauwörth (DE)
(72) Erfinder: Durner, Andreas, 86609 Donauwörth (DE); Draheim, Andre, 86609 Donauwörth (DE)
(74) Vertreter: Borchert, Uwe Rudolf

(57) **Zusammenfassung**

Die Erfindung betrifft eine Elektronische Brille, insbesondere Nachtsichtbrille (10), umfassend eine elektronische in die Brille integrierte Aufnahmekamera (26) als primäres Aufnahmemittel für den Nutzer der Brille, welche mit einer Aufnahmeoptik und einem CCD-Sensor versehen ist, eine der Aufnahmekamera (26) nachgeschaltete Bildverarbeitungseinheit (48), welche das von der Aufnahmekamera (26) aufgenommene Bild auf elektronischem Weg verarbeitet und ein Ausgangssignal für ein jedem Auge zugeordnetes Anzeigemittel (28, 39) zur Wiedergabe des Bildes zur Verfügung stellt, und eine Wiedergabeoptik (32, 34), die jedem Anzeigemittel (28, 30) nachgeschaltet ist. Erfindungsgemäß weist die Bildverarbeitungseinheit eine digitalisierte Verstärkervorstufe aufweist, welche das von der Aufnahmekamera (26) kommende Signal von Rausch- und Störanteilen befreit, und dass der Verstärkervorstufe ein Digital/Analog-Wandler nachgeschaltet ist, sodass das Signal danach als Analogsignal mit einem Normpegel von 1 Vss (Voltspitze - Spitze = PAL-Pegel = Videonormpegel) weiterverarbeitbar ist.

## Beschreibung

Die Erfindung betrifft eine elektronische Brille, insbesondere eine Nachtsichtbrille, gemäß der im Oberbegriff des Anspruches 1 angegebenen Art.

Für polizeiliche Überwachungszwecke, für militärische Operationen, aber auch für den Sport- und Freizeitbereich besteht ein zunehmendes Bedürfnis an elektronischen Brillen, insbesondere Nachtsichtbrillen. Dabei besteht die Forderung nach einfacher Handhabbarkeit, geringem Gewicht und der Einsetzbarkeit auch bei starker Änderung der Lichtintensität des zu beobachtenden Bereichs. Mit Nachtsichtbrillen sollen Tätigkeiten wie tagsüber ohne Verwendung zusätzlicher Lichtquellen durchgeführt werden.

Eine Nachtsichtbrille ist beispielsweise aus der DE 38 06 940 A1 bekannt. Bei einer derartigen Nachtsichtbrille wird das durch das Mondlicht oder das Sternenlicht vorhandene Restlicht durch einen Bildwandler verstärkt. Diese Nachtsichtbrille umfasst dabei für jedes Auge eine Aufnahmeoptik, einen Bildwandler und Anzeigemittel. Die Anzeigemittel sind mit einer Optik versehen, über die das Bild wiedergegeben wird. Der Bildwandler besteht im wesentlichen aus einer Kathodenstrahlröhre, welche die Strahlen des Restlichtes verstärkt und die derart verstärkten Strahlen über die Anzeigemittel und ein Okular wiedergibt.

Derartige Nachtsichtbrillen haben den Nachteil, dass sie eine hohe Betriebsspannung benötigen. Zusammen mit den Batterien und der Kathodenstrahlröhre weisen sie ein hohes Gewicht auf. Zudem ist die Bildqualität sehr eingeschränkt. Details können nicht erkannt werden. Des Weiteren ist ihr Einsatzgebiet aufgrund der geringen Empfindlichkeit - bis maximal 0,001 Lux Restlicht ohne Zusatzbeleuchtung, was einer Restlichtverstärkung von 30.000 bis 40.000 entspricht, stark eingeschränkt. Hinzu kommt noch, dass bei einer starken Helligkeitsänderung, beispielsweise durch einen Scheinwerfer, der Benutzer der Brille geblendet und dadurch handlungsunfähig wird.

Des Weiteren ist aus der DE 197 24 140 C2 eine gattungsgemäße elektrische Brille, insbesondere Nachtsichtbrille, bekannt, die eine elektronische Kamera mit einer Aufnahmeoptik und einem CCD-Sensor umfasst. Zudem weist diese elektrische Brille eine Bildverarbeitungseinheit auf, welche das von der Kamera aufgenommene Bild verarbeitet und ein Ausgangssignal für ein jedem Auge zugeordnetes Anzeigemittel mit einer Wiedergabeoptik zur Wiedergabe des Bildes zur Verfügung stellt. Diese Brille wird jedoch immer im Zusammenhang mit einer Infrarotlichtquelle betrieben, um die Nachtsichteigenschaften der Nachtsichtbrille zu verbessern. Hierfür wir die Infrarotlichtquelle gepulst, um einen möglichst hohen Wirkungsgrad und geringen Stromverbrauch zu erzielen. Zudem ist ein Sensor vorgesehen, der in Abhängigkeit des Restlichtes die Intensität des Infrarotlichtes steuert.

Diese Ausführungsform leidet unter den relativ hohen Stromverbrauch aufweist, was zu einem großen Batteriebedarf mit hohem Gewicht oder einer geringen Einsatzzeit führt. Zudem ist es nachteilig, insbesondere im militärischen Kampfeinsatz in der Nacht, dass der Benutzer dieser Nachtsichtbrille durch das Infrarotlicht für den Gegner leicht mit Hilfe einer entsprechenden Brille erkennbar ist. Hierdurch wird der Benutzer zu einem leicht ermittelbarem Ziel und unterliegt daher einer hohen Gefährdung.

Hinzu kommt noch, dass bei allen bekannten Brillen das Problem besteht, dass eine exakte Darstellung der betrachteten Umgebung nicht erfolgt. Der Benutzer hat daher größte Schwierigkeiten sich zu orientieren und sich im Gelände mit einer derartigen Brille in der Nacht zu bewegen. Exakte Entfernungsschätzung und ein räumliches Sehen ist mit den bekannten elektrischen Brillen nicht oder zumindest nur äußerst eingeschränkt möglich.

Aus der WO97/09652 ist als primäres Aufnahmemittel ein Bildwandler vorgesehen, dessen verstärktes Bild zum Auge geführt wird. Die optische Achse des Auges ist dabei versetzt zur optischen Achse des Bildwandlers. Über Spiegel wird das Bild des Bildwandlers zum Auge des Betrachters umgelenkt. Die dort offenbarten Bildwandler weisen jedoch die eingangs erwähnten Nachteile auf. Offenbart ist weiterhin, dass statt dem Bildwandler eine CCD-Kamera verwendet wird. Diese hat jedoch den Nachteil, dass eine Echtzeitdarstellung durch das bekannte System nicht möglich ist, da die Signalverarbeitung sehr langsam ist.

Der Erfindung liegt daher die Aufgabe zugrunde, eine elektrische Brille gemäß der im Oberbegriff des Anspruches 1 angegebenen Art, derart weiter zu bilden, dass unter Vermeidung der genannten Nachteile eine für unterschiedlichste Einsatzgebiete optimierte elektrische Brille geschaffen wird.

Diese Aufgabe wird durch die kennzeichnenden Merkmale des Anspruches 1 in Verbindung mit seinen Oberbegriffsmerkmalen gelöst.

Nach der Erfindung weist die Bildverarbeitungseinheit eine digitalisierte Verstärkervorstufe auf, welche das von der Aufnahmekamera kommende Signal von Rausch- und Störanteilen befreit, wobei der Verstärkervorstufe ein Digital/Analog-Wandler nachgeschaltet ist, sodass das Signal danach als Analogsignal mit einem Normpegel von 1 Vss (Voltspitze - Spitze = PAL-Pegel = Videonormpegel) weiterverarbeitbar ist. Dadurch wird eine realistische Darstellung durch eine schnelle Übertragung der von der CCD-Aufnahmekamera generierten Bildsignale zum Anzeigemittel ermöglicht. Hierbei liegt der Erfindung die Erkenntnis zugrunde, dass die durch die CCD-Aufnahmekamera mit ihrer Bildverarbeitungseinheit erzeugten und bearbeiteten digitalen Bildsignale zur Übertragung von der Aufnahmekamera zu den Anzeigemitteln wieder in analoge Bildsignale gewandelt und als analoge Bildsignale zu den Anzeigemitteln übertragen werden. Dort werden die Bildsignale entsprechend verarbeitet und die entsprechenden Bilder über die Anzeigemittel angezeigt. Die analoge Übertragung der Bildsignale beschleunigt die Signalverarbeitung erheblich, sodass eine Echtzeitdarstellung auf dem Display erzeugbar ist. Das bisher übliche Zwischenspeichern und serielle Übertragen des Bildsignals von der Aufnahmekamera zu den Anzeigemitteln wird durch die Wandelung in ein analoges Signal und anschließende Übertragung ersetzt.

Gemäß einer Ausführungsform der Erfindung sind die Mittelachse der Anzeigemittel, die optische Achse der Wiedergabeoptik und die jeweils zugeordneten Augachsen des Benutzers in einer Grundposition der Augen des Benutzers - gerader Blick nach vorne - konzentrisch zueinander ausgerichtet. Hierdurch wird erreicht, dass mit einfachem Aufwand das Bild den realen Größenverhältnissen entspricht. Hierdurch ist es möglich, dass der Benutzer auch komplizierte Handgriffe bei Nutzung der Brille ausführen kann, da dass von ihm erkannte Bild den realen Dimensionen und Verhältnissen entspricht. Zudem entsteht der Effekt zumindest eines virtuellen räumlichen Bildes, sodass auch eine Orientierung und Entfemungsschätzung einfacher wird.

Um insbesondere Sehschwächen ausgleichen zu können ist die jeweilige Wiedergabeoptik des Anzeigemittels relativ zum Anzeigemittel entlang der optischen Achse verstellbar ausgebildet. Insbesondere ist die Verstellbarkeit unabhängig von der Verstellbarkeit der Wiedergabeoptik des anderen Anzeigemittels ausgebildet. Eine scharfe Wiedergabe für den Benutzer auf beiden Augen wird dadurch gewährleistet und individuelle Sehschwächen ausgeglichen.

Um das räumliche Sehen zu optimieren, sind zwei Kameras sowie zwei Bildverarbeitungseinheiten für jedes Anzeigemittel vorgesehen, welche hinsichtlich der Verarbeitungsschritte zeitlich synchronisiert sind. Vorzugsweise sind dabei die optischen Achsen der Kamera mit den Augachsen des Benutzers in der Grundposition konzentrisch. Mit einfachen Mitteln wird hierdurch die exakte räumliche Wiedergabe erreicht.

Gemäß einer Ausführungsform der Erfindung sind die Anzeigemittel in einem festen Träger angeordnet und seitlich zur Ausrichtung mit den Augachsen verschiebbar in dem Träger gelagert, wobei der Träger fest in dem Brillengestell angeordnet ist. Dadurch wird erreicht, dass das Bild entsprechend der Realität und im entsprechenden Größenverhältnis wiedergegeben wird und nicht durch Verschiebung der Bauteile zueinander innerhalb der Anordnung verzerrt wird.

Daher sind auch die Aufnahmeoptik und die Bildverarbeitungseinheit in dem Träger angeordnet, sodass der feste Träger eine vorbestimmte Zuordnung aller auf dem Träger angeordneten Teile zu einander gewährleistet.

Für eine möglichst realistische Darstellung des Bildes sind die vorgenannten optischen Merkmalen von Vorteil, aber auch die folgenden, die Elektronik betreffenden, Merkmale führen zu einer Verbesserung einer realistischeren Darstellung.

Insbesondere ist die Kamera und die Bildverarbeitungseinheit so ausgelegt, dass das vom Benutzer bei Gebrauch erfassbare Bild in Echtzeit dargestellt wird. Hierdurch wird sich nicht nur durch die Art der Darstellung sondern auch durch die Geschwindigkeit der Darstellung der Realität zumindest weitestgehend angenähert.

Um im Nachtsichtbereich eine gute Bildqualität zu erhalten, weist die Kamera einen CCD-Sensor für den Nachtsichtbereich mit einer Empfindlichkeit für eine Wellenlänge von 500 bis 1200 nm auf. Hierdurch wird der Einsatzbereich erheblich erweitert, insbesondere bis in den hohen Infrarotbereich.

Gemäß einer Ausführungsform der Erfindung ist die Kamera für ein Restlicht von kleiner als 0,001 Lux, insbesondere 0,0002 Lux ohne Zusatzausleuchtung ausgelegt.

Zur Verbesserung der Bildqualität ist der CCD-Sensor vor allem mit einer Bildauflösung von zumindest 790 x 590 versehen.

Da die Bildqualität bei Schwarz/Weiß-Darstellungen wesentlich höher ist, ist das Anzeigemittel für Schwarz/Weiß-Darstellungen ausgelegt, insbesondere zur Darstellung von 256 Graustufen.

Die Bildqualität kann weiter verbessert werden, indem die digitalisierte Verstärkervorstufe das von der Kamera kommende Signal von Rausch- und Störanteilen befreit, insbesondere im hohen Infrarotbereich - Wellenlänge von 650 bis 1200 nm.

Dabei weist vorzugsweise die Bildverarbeitungseinheit zwei in Reihe geschaltete analoge Verstärkerstufen und eine Schaltung für eine Steuerspannung auf, welche die Verstärkerstufen bei Auslesen jedes Bildpixels - beispielsweise zeilenweise - aus dem CCD-Sensor der Kamera auf "Null" eicht, um eine saubere Signalverarbeitung und Auslesung zu gewährleisten. Hierbei werden die Rauschanteile weiter unterdrückt.

Die Verstärkerstufen sind dabei mit einer Signalverstärkung von mehr als 25 Dezibel, insbesondere 52 Dezibel, gegenüber dem Normpegel versehen.

Des Weiteren ist es von Vorteil, wenn die Verstärkerstufen eine externe Beschaltung aufweisen, welche in ihrer Auslegung und Skalierung dem Signalverlauf der Verstärkung und der Übertragung für Bildinformationen im schwarz-weiß Bereich optimiert sind.

Den Verstärkerstufen ist insbesondere eine Regelung für den Bereich von 5 bis 52 Dezibel zugeordnet, welche bei schneller Helligkeitsänderung der Umgebung die Verstärker so aussteuern, dass keine merkliche Überbelichtung des Bildes auftritt. Insbesondere ist die Regelung dabei manuell zuschaltbar ausgebildet.

Hierdurch wird gewährleistet, dass bei allen Lichtverhältnissen die uneingeschränkte Sicht erhalten bleibt. Zudem kann es für bestimmte Einsatzgebiete von Vorteil sein, diese Regelung auszuschalten, damit der Nutzer die Änderung der Lichtverhältnisse mitbekommt.

Gemäß einer Ausführungsform der Erfindung ist den Verstärkerstufen eine manuell betätigbare Steuerung zugeordnet, über welche die Empfindlichkeit der Verstärker durch den Benutzer eingestellt wird. Dadurch wird eine Anpassung an die Lichtverhältnisse und/oder an den jeweiligen Einsatzzweck durch den Benutzer ermöglicht.

Vorzugsweise enthalten die Verstärkerstufen eine Sample und Hold-Schaltung über einen Feldeffekttransistor zur Klemmung des Signals (Clamp), die in Abhängigkeit des ankommenden Signals zeitabhängig gesteuert werden, um eine hohe Empfindlichkeit und Harmonie der Verstärkerstufen zu erreichen.

Zur Verbesserung der Bildqualität wird das Bildrauschen und die Falschfarbanteile dadurch zumindest unterdrückt oder beseitigt, wenn dem Digital/Analog-Wandler mindestens zwei aktive Signalfilter in Form eines Bandpassfilters nachgeschaltet sind.

Dabei sind insbesondere den aktiven Signalfiltern eine Signalpufferstufe mit einer Verstärkung, insbesondere von mehr als zwei, gegenüber dem Normalpegel nachgeschaltet, damit Verluste aus der vorangegangenen Signalverarbeitung und Signalführung kompensiert und ausgeglichen werden.

Gemäß einer Ausführungsform der Erfindung ist den Anzeigemitteln ein Bandpassfilter und eine Signalweiche zur Impedanzanpassung vorgeschaltet, um eine verlustfreie Anpassung an die nachfolgende Displayelektronik zu gewährleisten.

Die Signalweiche wirkt dabei insbesondere mit einer Signalverarbeitung zusammen, die Phasengleichheit und Synchronität der dargestellten Bilder in den Anzeigemitteln ermöglicht.

Das Anzeigemittel wird vorzugsweise durch einen AMLCD-Bildschirm oder einen FLLCD-Bildschirm gebildet.

Die elektronische Brille ist mit einer Spannungsquelle verbunden, insbesondere einer Batterie, um ortsunabhängig agieren zu können.

Vorzugsweise ist die Batterie dabei in einem, insbesondere separaten, Batteriegehäuse angeordnet, das am Körper eines Nutzer befestigbar ausgebildet ist.

Gemäß einer Ausführungsform der Erfindung weist das Anzeigmittel eine On-Screen-Anzeige für im Hinblick auf das wiedergegebene Bild zusätzliche Informationen auf. Beispielsweise können Informationen über den Auftrag des Benutzers, die erkennbare Gegend und ähnliches eingeblendet werden.

Insbesondere ist auch eine Sende- und/oder Empfangsschnittstelle vorgesehen, mit der die vom Benutzer sichtbaren Bilder übertragen werden können. Hierdurch ist es möglich, dass beispielsweise in einem Befehlsstand, der Führungsoffizier des Benutzers auch die Bilder des Benutzers erhält und entsprechende Weisungen ausgeben kann, die über die On-Screen-Anzeige dem Benutzer zur Kenntnis gelangen.

Weitere Vorteile, Merkmale und Anwendungsmöglichkeiten der vorliegenden Erfindung ergeben sich aus der nachfolgenden Beschreibung in Verbindung mit den in der Zeichnung dargestellten Ausführungsbeispielen.

Die Erfindung wird im Folgenden anhand der in der Zeichnung dargestellten Ausführungsbeispielen näher beschrieben. In der Beschreibung, in den Patentansprüchen, der Zusammenfassung und in der Zeichnung werden die in der hinten angeführten Liste der Bezugszeichen verwendeten Begriffe und zugeordneten Bezugszeichen verwendet. In der Zeichnung zeigen:
- Fig. 1: eine perspektivische Darstellung einer Nachtsichtbrille gemäß einer Ausführungsform der Erfin- dung von seitlich oben hinten;
- Fig. 2: eine perspektivische Darstellung der Nachtsichtbrille von Fig. 1 von vorne;
- Fig. 3: eine perspektivische Darstellung des Einsatzes der Nachtsichtbrille von Fig. 2, jedoch ohne Außenwandung;
- Fig. 4: eine perspektivische Darstellung des Einsatzes der Nachtsichtbrille von Fig. 1, jedoch ohne Rückwandung;

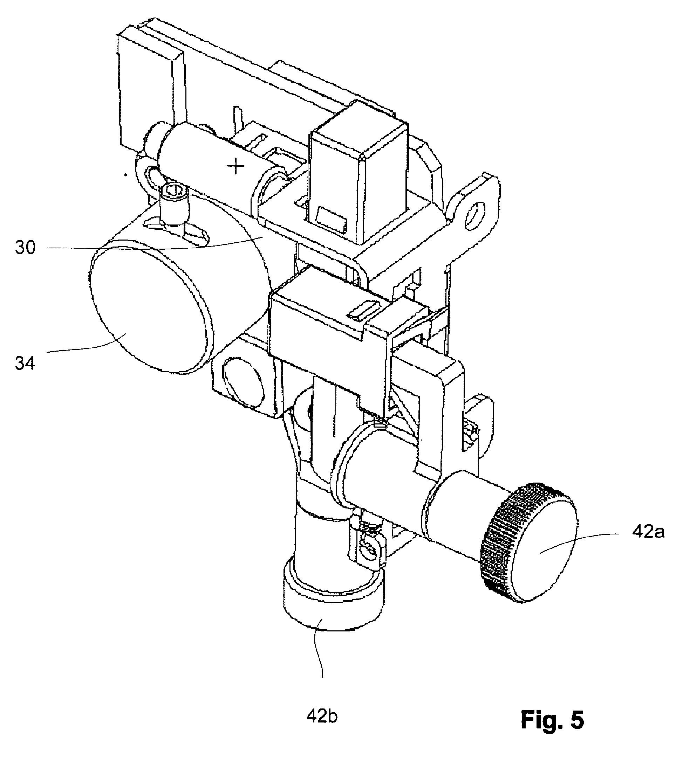

- Fig. 5: eine perspektivische Darstellung eines Details von Fig. 4, das die Verstellbarkeit der Wiedergabeoptik und der Anzeige zeigt, und
- Fig. 6: ein schematisches Blockschaltbild, das die Signalverarbeitung zeigt.

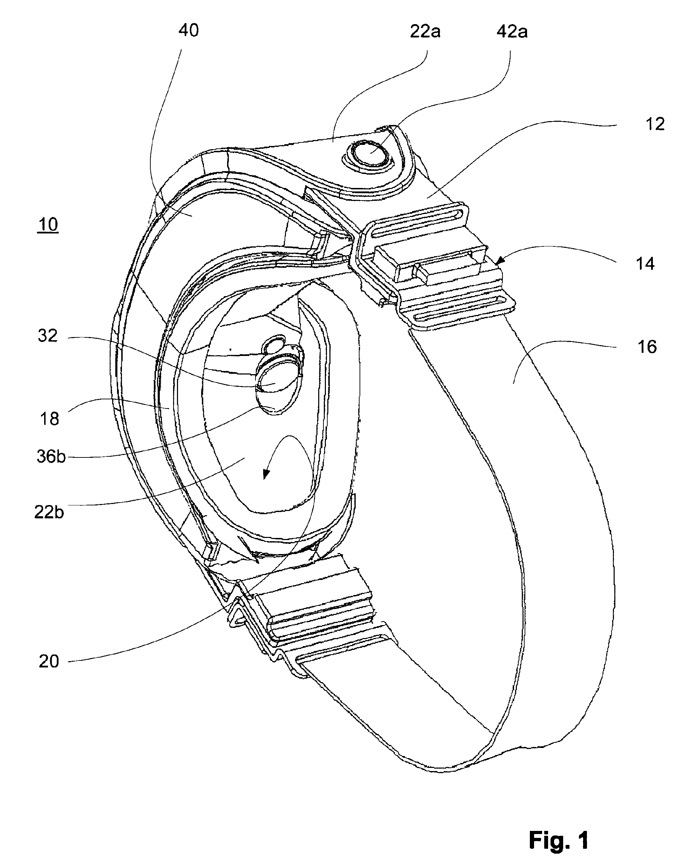

In den Figuren 1 bis 4 sind in unterschiedlichen Darstellungen in einer Ausführungsform eine Nachtsichtbrille 10 nach der Erfindung dargestellt. Die Nachtsichtbrille 10 besteht aus einem Brillengestell 12, an das über einen Verschluss 14 ein Befestigungsriemen 16 angreift. Das Brillengestell 12 ist in der Art einer Schutz/Skibrille ausgebildet und weist an seiner den Kopf des Benutzers zugewandten Seite Polsterungen 18 auf.

In dem Brillengestell 12 ist ein Einsatz 20 eingebracht, der an seiner dem Kopf des Benutzers abgewandten Seite mit einer Schutzwand 22a und seiner dem Kopf des Benutzers zugewandten Seite mit einer Schutzwand 22b abgedeckt ist. Der Einsatz 20 ist fest in dem Brillengestell 12 angeordnet.

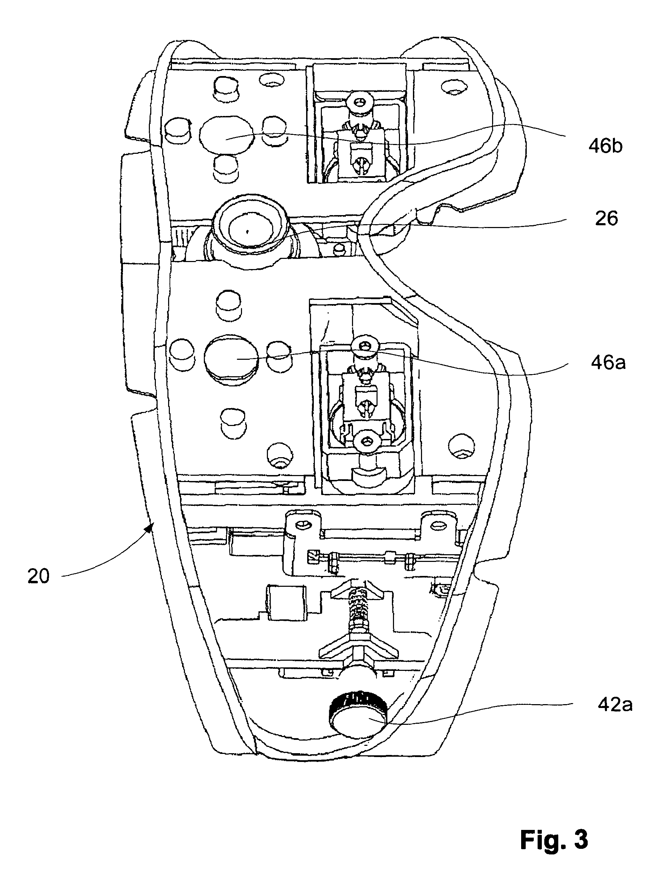

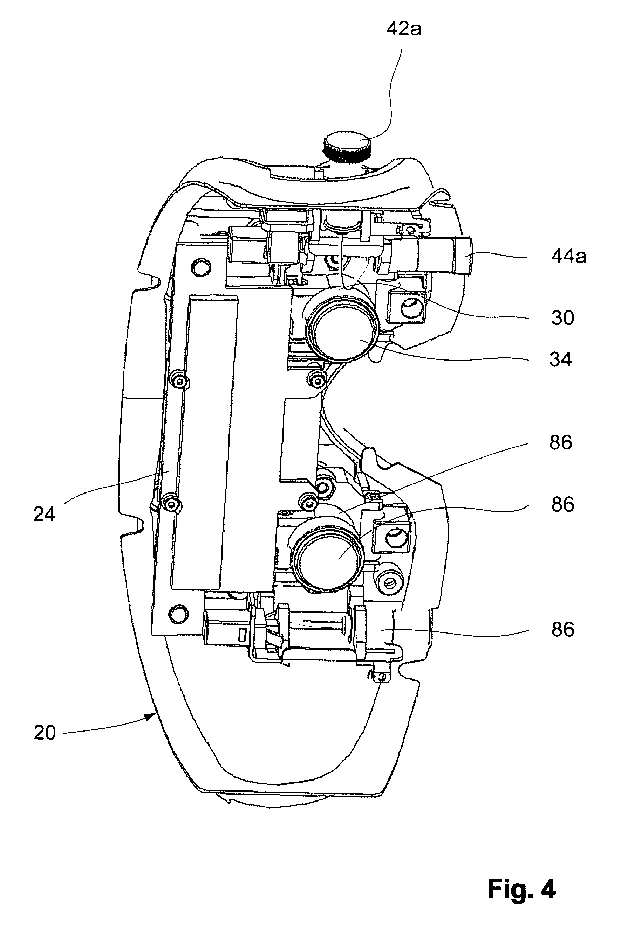

Der Einsatz 20 ist im Einzelnen den Figuren 3 und 4 zu entnehmen und ist mit einer Tragplatte 24 versehen, auf der alle optischen und elektrischen Bauteile fest angeordnet sind.

Auf der Tragplatte 24 ist eine Kamera 26 sowie zwei Displays 28 - links - und 30 - rechts - angeordnet. Zudem ist jeweils eine Widergabeoptik 32 bzw. 34 einem Display 28 oder 30 zugeordnet auf der Tragplatte 24 gelagert.

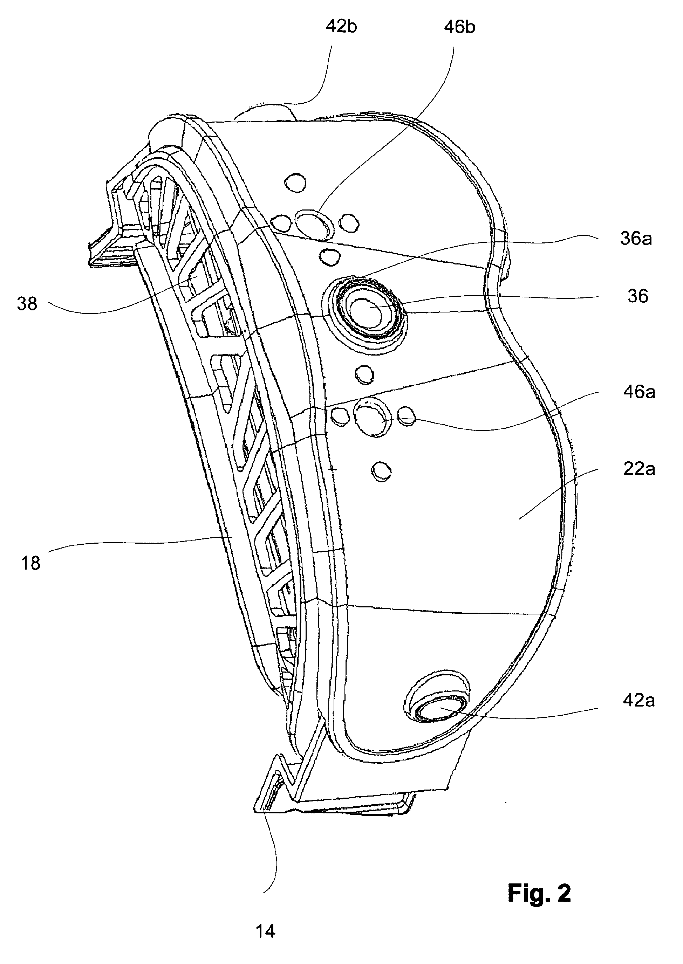

Die Schutzwand 22b weist Aussparungen 36b und 36c für die Wiedergabeoptik und die Schutzwand 22a Aussparungen 36a für Kamera 26 auf, siehe Figuren 1 und 2.

An der Oberseite des Brillengestelles 12 sind Lüftungsöffnungen 38 vorgesehen, die durch eine durchlässige Folie 40 abgedeckt sind. Hierdurch wird gewährleistet, dass die durch die Elektronik entwickelte Wärme über die Lüftungsöffnungen 38 und die durchlässige Folie 40 aus dem Inneren der Nachtsichtbrille 10 austreten kann.

Die Kamera 26, die Displays 28 und 30 und die Wiedergabeoptik 32 und 34 sind so aufeinander abgestimmt, dass das vom Benutzer bei Gebrauch erfassbare Bild im Hinblick auf die dargestellten Dimensionen den realen Verhältnissen bei uneingeschränktem direkten Blick des Benutzers entspricht. Hierfür ist die Wiedergabeoptik 32 mit dem Display 28 sowie die Wiedergabeoptik 34 mit dem Display 30 so gekoppelt, dass diese in der Tragplatte 24 miteinander seitlich verschiebbar sind. Über die seitliche Verschiebbarkeit wird der Augachsenabstand, der von Benutzer zu Benutzer unterschiedlich sein kann, so eingestellt, dass die Mittelachse der Displays 28 bzw. 30, die optische Achse der Wiedergabeoptik 32 bzw. 34 und die jeweils zugeordneten Augachsen des Benutzers in einer Grundposition der Augen des Benutzers - gerader Blick nach vorne - konzentrisch zu einander ausgerichtet sind. Hierfür ist eine Einstellvorrichtung 42a und 42b auf jeder Seite des Einsatzes 20 der Nachtsichtbrille 10 vorgesehen. Um zudem auch Sehschwächen der einzelnen Augen des Nutzers ausgleichen zu könne, ist eine weitere Einstellvorrichtung 44a und 44b für die entsprechende Wiedergabeoptik 32 bzw. 34 vorgesehen, mittels der die Wiedergabeoptik 32, 34 entlang ihrer optischen Achse relativ zum Display 28, 30 verschiebbar ist. Die Einstellung der Wiedergabeoptik 32 und 34 über die weitere Einstellungsvorrichtung 44a bzw. 44b erfolgt jeweils unabhängig von der Wiedergabeoptik 34 bzw. 32 des anderen Displays 30, 28.

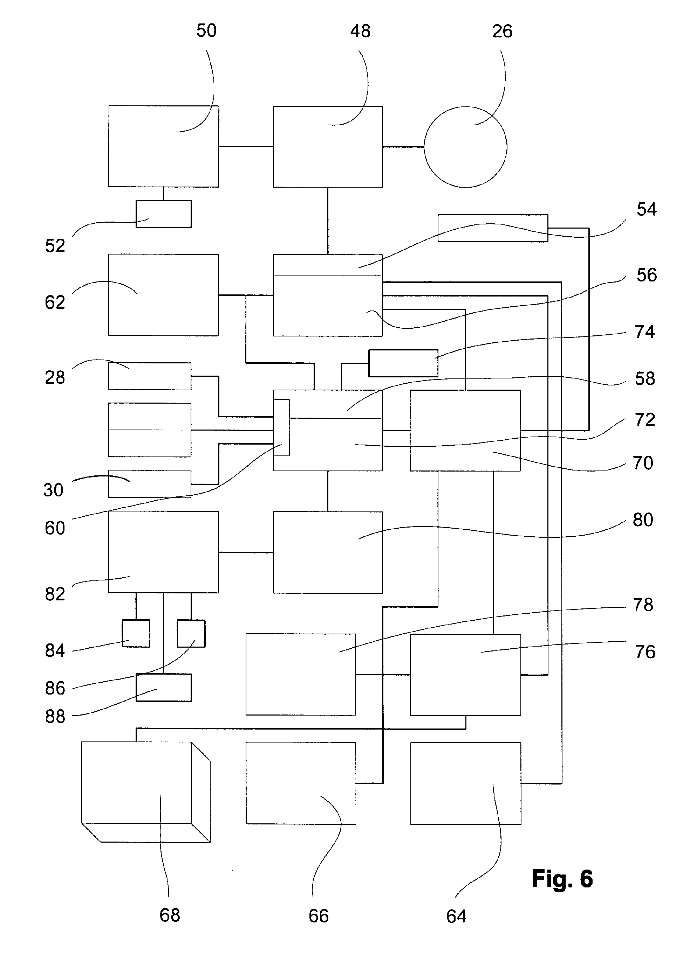

Die Nichtsichtbrille 10 weist des weiteren Restlichtsensoren 46a und 46b auf, die mit einer Regelung zusammenwirken. Hierauf wird weiter unten im Zusammenhang mit Figur 6 noch eingegangen.

Die Kamera 26 arbeitet mit einer Bildverarbeitungseinheit 48 zusammen. Die Kamera 26 und die Bildverarbeitungseinheit 48 sind dabei so ausgelegt, dass das vom Benutzer bei Gebrauch der Nachtsichtbrille erfassbare Bild in Echtzeit dargestellt wird. Die Kamera 26 weist dabei einen CCD-Sensor für den Nachtsichtbereich mit einer Empfindlichkeit für eine Wellenlänge von 500 bis 1200 nm auf und ist für ein Restlicht von kleiner als 0,001 Lux, insbesondere 0,0002 Lux ohne Zusatzbeleuchtung ausgelegt. Der CCD-Sensor weist des Weiteren eine Bildauflösung von zumindest 790 x 590 auf.

Die Kamera 26 ist mit einer hier im Einzelnen nicht dargestellten Aufnahmeoptik mit fixen oder verstellbaren Linsen versehen.

Die Bildverarbeitungseinheit 48 wirkt mit einer Verstärkerregelung 50 zusammen, die über ein Bedienelement 52 zu und abschaltbar ist. Die Bildverarbeitungseinheit 48 ist mit einer digitalisierten Verstärkervorstufe versehen, welche das von der Kamera 26 kommende Signal von Rausch- und Störanteilen befreit, insbesondere im vom nahen bis in den hohen Infrarotbereich - Wellenlänge von 650 bis 1200 nm. Der Verstärkervorstufe ist ein Digital/Analog-Wandler nachgeschaltet, sodass das Signal danach als Analogsignal mit einem Normpegel von 1 Vss (Voltspitze - Spitze = PAL - Pegel) weiterverarbeitbar ist. Danach durchläuft das Signal in der Bildverarbeitungseinheit 48 zwei in Reihe geschaltete analoge Verstärkerstufen. Die Verstärkerstufen weisen eine Steuerspannung auf, welche die Verstärkerstufen bei Auslesen jedes Bildpixels - beispielsweise zeilenweise - aus dem CCD-Sensor der Kamera 26 auf "Null" eicht, um eine saubere Signalverarbeitung und Auslesung zu gewährleisten. Hierbei werden auch Rauschanteile unterdrückt. Die Verstärkerstufen sind dabei mit einer Signalverstärkung von mehr als 25 Dezibel, insbesondere 52 Dezibel gegenüber dem Normpegel versehen.

Die Verstärkerstufen sind mit einer externen Beschaltung versehen, welche ihrer Auslegung und Skalierung dem Signalverlauf der Verstärkung und Übertragung für Bildinformationen schwarz-weiß optimiert sind. Den Verstärkerstufen ist eine Regelung für den Bereich von 5 bis 52 Dezibel zugeordnet. Diese Regelung wirkt mit den Restlichsensoren 46a und 46b derart zusammen, dass die Verstärkerstufen entsprechend der Intensität des Restlichtes angepasst werden. Der Benutzer erhält dadurch eine unabhängig von den Restlichtverhältnissen gleich gute Bildqualität.

Die Verstärkerstufen enthalten eine Sample und Hold-Schaltung über einen Feldeffekttransistor zur Klemmung des Signals, die in Abhängigkeit des ankommenden Signals zeitabhängig gesteuert werden, um eine hohe Empfindlichkeit und Harmonie der Verstärkerstufen zu erreichen. Der Bildverarbeitungseinheit 48 und somit dem Digital/Analog-Wandler der Bildverarbeitungseinheit 48 sind mindestens zwei aktive Signalfilter in Form eines Bandpassfilters 54 nachgeschaltet, die zur Verbesserung der Bildqualität das Bildrauschen und die Falschfarbanteile zumindest unterdrücken oder beseitigen. Dem aktiven Signalfilter 54 ist eine Signalpufferstufe 56 mit einer Verstärkung, insbesondere von mehr als zwei, gegenüber dem Normalpegel nachgeschaltet, damit Verluste aus der vorangegangenen Signalverarbeitung und Signalführung kompensiert und ausgeglichen werden.

Den Displays 28 und 30 ist ein weiterer Bandpassfilter 58 und eine Signalweiche 60 zur Impedanzanpassung vorgeschaltet, um eine verlustfreie Anpassung an die nachfolgende Displayelektronik zu gewährleisten. Dabei wirkt die Signalweiche 60 mit einer Signalverarbeitung zusammen, die Phasengleichheit und Synchronität der dargestellten Bilder in den Displays 28 und 30 ermöglicht.

Das Display 28, 30 kann dabei ein AMLCD- oder FLLCD-Bildschirm in Flüssigkristalltechnik oder Ferrolyttechnik sein, das für die Darstellungen in schwarz-weiß optimiert ist.

Die Nachtsichtbrille 10 ist mit einer Spannungsquelle, nämlich einer Batterie 62 verbunden. Die Batterie 62 ist in einem separaten Batteriegehäuse angeordnet, dass am Körper eines Nutzers befestigbar ist. Derartige Batteriegehäuse sind bekannt, sodass diese im Einzelnen hier nicht beschrieben werden müssen.

Die Nachtsichtbrille 10 ist mit einer Sendeschnittstelle 64 und einer Empfangsschnittstelle 66 sowie mit einer seriellen Schnittstelle 68 versehen. Die Sendeschnittstelle 64 wirkt mit der Signalpufferstufe 56 und die Empfangsschnittstelle 66 mit einer weiteren Signalpufferung 70 für Ein- und Ausgänge zusammen.

Diese Signalpufferung 70 wirkt mit einem Videodriver 72 zusammen, der den Bandpassfilter 58 umfasst. Über ein Bedienelement 74 kann der Kontrast und die Helligkeit des Displays über den Videodriver eingestellt werden.

Über die serielle Schnittstelle 68 können die Daten für eine OSD-Anzeige in den Bildschirmen 28 und 30 eingespielt werden. Hierfür wirkt die serielle Schnittstelle 68 mit einem OSD Textgenerator 76 zusammen. Über einen Kartenleser 78 erfolgt die Identifizierung des Nutzers mit entsprechender Auswahl der OSD-Daten für den zugeordneten Nutzer. Zudem kann ein OSD-Datengenerator 80 für die interne Dateneinblendung vorgesehen sein, der mit einer entsprechender Messdatenerfassung und entsprechenden Sensoren 84, 86 und 88 zusammen wirkt. Hierbei kann es sich um Sensoren für die Batteriespannung, einen Lichtsensor, einen Gassensor, eine Zeiterfassung und ähnliches handeln.

Die Batterieüberwachung mit einem entsprechenden Sensor 84 kann zudem aus zwei Leuchtdioden bestehen, einer als Betriebsüberwachung mit Helligkeitssteuerung, die andere als Überspannungsdetektor mit Warnsignal. Optional kann auch ein akustischer Warnsummer vorgesehen sein. Die serielle Schnittstelle 68 kann mit einem GPS-System, einem Wireless-Lan-System und ähnliches zusammen wirken.

Die Nachtsichtbrille 10 gemäß der Erfindung erweitert die Sichtmöglichkeit bei Dunkelheit. Insbesondere kann die Nachtsichtbrille 10 auch für den Freizeitbereich verwendet werden. Hierdurch werden sportliche Betätigungen bei Dunkelheit ermöglicht. Eine besondere Eignung ist auch für Fahrradfahrer zusehen, insbesondere Mountainbiker oder Läufer im Gelände. Ihre Sichtmöglichkeiten sind nun von einer Beleuchtungseinrichtung unabhängig. Über den Befestigungsriemen 16 ist die Nachtsichtbrille 10 fest am Kopf fixiert. Hierdurch wird die Nachtsichtbrille 10 bei Kopfbewegungen einfach mitgeführt.

Die Form des Brillengestelles 12 ist an einen Kopf angepasst, sodass keine störenden Lichteinflüsse von außen ins Innere gelangen.

Die Erfindung zeichnet sich durch ihre einfache Konstruktion und ihrer realistischen Darstellung des Beobachtungsbereiches durch das Bild aus.

### Bezugszeichenliste

- 10: Nachtsichtbrille
- 12: Brillengestell
- 14: Verschluss
- 16: Befestigungsriemen
- 18: Polsterungen
- 20: Einsatz
- 22a: Schutzwand - vorne
- 22b: Schutzwand - hinten
- 24: Tragplatte
- 26: Kamera
- 28: Display - links
- 30: Display - rechts
- 32: Wiedergabeoptik - links
- 34: Wiedergabeoptik - rechts
- 36a: Aussparung für die Kamera
- 36b: Aussparung für die Wiedergabeoptik - links
- 36c: Aussparung für die Wiedergabeoptik - rechts
- 38: Lüftungsöffnungen
- 40: durchlässige Folie
- 42a: Einstellvorrichtung - rechts
- 42b: Einstellvorrichtung - links
- 44a: weitere Einstellvorrichtung - rechts
- 44b: weitere Einstellvorrichtung - links
- 46a: Restlichtsensor - rechts
- 46b: Restlichtsensor - links
- 48: Bildverarbeitungseinheit
- 50: Verstärkersteuerung
- 52: Bedienelement
- 54: Bandpassfilter
- 56: Signalpufferstufe
- 58: Bandpassfilter und Viedeodriver
- 60: Signalweiche
- 62: Batterie
- 64: Sendeschnittstelle
- 66: Empfangsschnittstelle
- 68: Serielle Datenschnittstelle
- 70: weitere Signalpufferung für Ein- und Ausgänge
- 72: Videodriver und Signalfilter
- 74: Bedienelement
- 76: OSD Textgenerator
- 78: Kartenleser
- 80: OSD Datengenerator
- 82: Messdatenerfassung
- 84: Sensor
- 86: Sensor
- 88: Sensor

## Patentansprüche

1. Elektronische Brille, insbesondere Nachtsichtbrille (10), umfassend eine elektronische in die Brille integrierte Aufnahmekamera (26) als primäres Aufnahmemittel für den Nutzer der Brille, welche mit einer Aufnahmeoptik und einem CCD-Sensor versehen ist, eine der Aufnahmekamera (26) nachgeschaltete Bildverarbeitungseinheit (48), welche das von der Aufnahmekamera (26) aufgenommene Bild auf elektronischem Weg verarbeitet und ein Ausgangssignal für ein jedem Auge zugeordnetes Anzeigemittel (28, 39) zur Wiedergabe des Bildes zur Verfügung stellt, und eine Wiedergabeoptik (32, 34), die jedem Anzeigemittel (28, 30) nachgeschaltet ist, **dadurch gekennzeichnet, dass** die Bildverarbeitungseinheit eine digitalisierte Verstärkervorstufe aufweist, welche das von der Aufnahmekamera (26) kommende Signal von Rausch- und Störanteilen befreit, und dass der Verstärkervorstufe ein Digital/Analog-Wandler nachgeschaltet ist, sodass das Signal danach als Analogsignal mit einem Normpegel von 1 Vss (Voltspitze - Spitze = PAL-Pegel = Videonormpegel) weiterverarbeitbar ist.

2. Elektronische Brille nach Anspruch 1, **dadurch gekennzeichnet, dass** die digitale Verstärkervorstufe der Bildverarbeitungseinheit die Rausch und Störanteile bis in den nahen Infrarotbereich - mit einer Wellenlänge von 650 bis 1200 nm - befreit.

3. Elektronische Brille nach Anspruch 1 oder 2, **dadurch gekennzeichnet, dass** die Mittelachse der Anzeigemittel (28, 30), die optische Achse der Wiedergabeoptik (32, 34) und die jeweils zugeordneten Augachsen des Benutzers in einer Grundposition der Augen des Benutzers - gerader Blick nach vorne - konzentrisch zueinander ausgerichtet sind.

4. Elektronische Brille nach einem der vorangehenden Ansprüche, **dadurch gekennzeichnet, dass** die jeweilige Wiedergabeoptik (32, 34) des Anzeigemittels (28, 30) relativ zum Anzeigemittel (28, 30) entlang der optischen Achse verstellbar ausgebildet ist, insbesondere unabhängig von der Wiedergabeoptik (32, 34) des anderen Anzeigemittels (28, 30), um eine scharfe Wiedergabe für den Benutzer zu gewährleisten.

5. Elektronische Brille nach einem der vorangehenden Ansprüche, **dadurch gekennzeichnet, dass** zwei Aufnahmekameras (26), sowie zwei Bildverarbeitungseinheiten (48) für jedes Anzeigemittel (28, 30) vorgesehen sind, welche hinsichtlich der Verarbeitungsschritte zeitlich synchronisiert sind.

6. Elektronische Brille nach Anspruch 5, **dadurch gekennzeichnet, dass** die optischen Achsen der Aufnahmekamera (26) mit den Augachsen des Benutzers in der Grundposition konzentrisch sind.

7. Elektronische Brille nach einem der vorangehenden Ansprüche, **dadurch gekennzeichnet, dass** die Anzeigemittel (28, 30) in einem festen Träger (24) angeordnet und seitlich zur Ausrichtung mit den Augachsen verschiebbar in dem Träger (24) gelagert sind, wobei der Träger (24) fest in dem Brillengestell (12) angeordnet ist.

8. Elektronische Brille nach Anspruch 7, **dadurch gekennzeichnet, dass** die Aufnahmeoptik und die Bildverarbeitungseinheit (48) in dem Träger (24) angeordnet sind, sodass der feste Träger (24) eine vorbestimmte Zuordnung aller auf dem Träger (24) angeordneten Teile zueinander gewährleistet.

9. Elektronische Brille nach einem der vorangehenden Ansprüche, **dadurch gekennzeichnet, dass** die Aufnahmekamera (26) und die Bildverarbeitungseinheit (48) so ausgelegt ist, dass das von dem Benutzer bei Gebrauch erfassbare Bild in Echtzeit dargestellt wird.

10. Elektronische Brille nach einem der vorangehenden Ansprüche, **dadurch gekennzeichnet, dass** die Aufnahmekamera (26) einen CCD-Sensor für den Nachtsichtbereich mit einer erhöhten Empfindlichkeit für eine Wellenlänge von 500 bis 1200 nm aufweist.

11. Elektronische Brille nach Anspruch 9 oder 10, **dadurch gekennzeichnet, dass** die Aufnahmekamera (26) für ein Restlicht von kleiner als 0,001 Lux, insbesondere 0,0002 Lux ohne Zusatzausleuchtung ausgelegt ist.

12. Elektronische Brille nach einem der vorangehenden Ansprüche, **dadurch gekennzeichnet, dass** der CCD-Sensor eine Bildauflösung von zumindest 790 x 590 aufweist.

13. Elektronische Brille nach einem der vorangehenden Ansprüche, **dadurch gekennzeichnet, dass** das Anzeigemittel (28, 30) für Schwarz/Weiß-Darstellungen ausgelegt ist, insbesondere zur Darstellung von 256 Graustufen.

14. Elektronische Brille nach einem der vorangehenden Ansprüche, **dadurch gekennzeichnet, dass** die Bildverarbeitungseinheit (48) zwei in Reihe geschaltete analoge Verstärkerstufen und eine Schaltung für eine Steuerspannung aufweist, welche die Verstärkerstufen bei Auslesen jedes Bildpixels - beispielsweise zeilenweise - aus dem CCD-Sensor der Aufnahmekamera (26) auf "Null" eicht, um eine saubere Signalverarbeitung und Auslesung der Bildinformation zu gewährleisten - Rauschanteile werden hierbei unterdrückt.

15. Elektronische Brille nach Anspruch 14, **dadurch gekennzeichnet, dass** die Verstärkerstufen mit einer Signalverstärkung von mehr als 25 Dezibel, insbesondere 52 Dezibel, gegenüber dem Normpegel versehen sind.
